# EUROPEAN PATENT APPLICATION

(11) **EP 2 372 450 A1**
(43) Date of publication of application: **05.10.2011**
(21) Application number: 10007010.1
(22) Date of filing: 07.07.2010
(51) Int. Cl.: G03B 17/54, H04N 5/225

(54) **Image-projecting and image-capturing system and method**

(30) Priority: 26.03.2010 TW 099109088
(71) Applicant: Ability Enterprise Co., Ltd., Taipei (TW)
(72) Inventor: Pao, Chao-Han, Yuan-Li, Miao-Li (TW)
(74) Representative: Karakatsanis, Georgios

(57) **Abstract**

An image-projecting and image-capturing system primarily includes a projecting sub-system for projecting an image and a capturing sub-system for capturing an image. The capturing sub-system primarily comprises a zoom lens that consists of many lens groups moving along an optical axis. When capturing an image, the projecting sub-system is arranged at a location out of the optical axis; when projecting an image, the projecting sub-system is moved to aim the optical axis.

## Description

### FIELD OF THE INVENTION

The present invention relates to digital image systems and methods, and more particularly, relates to systems and methods for incorporation of image projecting and image capturing.

### DESCRIPTION OF THE PRIOR ART

Digital camera and digital camcorder have become essential electronic devices for life. Digital pictures or digitals movies are captured and are stored in the memory or memory card inside the digital camera or digital camcorder. If the digital pictures, digital movies, or slides contains digital images are required to be projected on a wall or screen, the digital images must be transmitted to a computer or an electronic device to connect with a projector so that the digital images can be projected. A conventional projector has drawback of large volume, noisy operating sound, and great power consumption. In addition, power supply must be additionally provided and the focal length is only adjusted by hand according to the distance.

To improve the deficiencies of conventional projector, current projector has a tendency toward to minimized dimensions and digital camera-incorporated projectors have been provided. Typically, the digital camera-incorporated projectors have a digital camera and a projector, where the projector includes a display element for forming an image beam and a projecting lens module for projecting the image beam on a wall or a screen; the digital camera includes an image sensor for recording a digital image of an object and a zoom lens for projecting the object onto the image sensor. However, because this digital camera-incorporated kind of projectors always cannot effectively arrange components of the projector and components of the digital camera, the size of the product is inevitably increased.

Therefore, it would be advantageous to provide a novel image-projecting and image-capturing system or method, which can effectively incorporate the components of the projector and the digital camera, and dimensions are hence minimized.

### SUMMARY OF THE INVENTION

An object of the present invention is to provide a novel image-projecting and image-capturing system or method, which can effectively incorporate the components of the projector and the digital camera, and dimensions are hence minimized.

According to the object or other objects, one embodiment of the present invention provides an image-projecting and image-capturing system that primarily includes a projecting sub-system for projecting images, and a capturing sub-system for capturing images, wherein the capturing sub-system primarily includes a zoom lens including a plurality of lens groups moved along an optical axis, when capturing an image, the projecting sub-system is arranged at a location out of the optical axis, when projecting an image, the projecting sub-system is moved to aim the optical axis.

According to the object or other objects, one embodiment of the present invention provides an image-projecting and image-capturing method, primarily including: employing a zoom lens for capturing images, wherein the zoom lens comprises a plurality of lens groups; and employing a projecting lens module and one or more of the plurality of lens groups for projecting images.

### BRIEF DESCRIPTION OF THE DRAWINGS

Figure 1A and figure 1B are block diagrams showing an image-projecting and image-capturing system according to an embodiment of the present invention.
Figure 2A and figure 2B are diagrams showing an image-projecting and image-capturing system according to another embodiment of the present invention.
Figure 3A and figure 3B show a rotation way to move projecting sub-system according to an embodiment.
Figure 4A and figure 4B show a shift way to move the projecting sub-system according to an embodiment.
Figure 5 shows a detail structure of the shift way to move the projecting sub-system, according to an embodiment of the present invention.
Figure 6 is a flow chart showing a method of image-projecting and image-capturing according to another embodiment of the present invention.

### DESCRIPTION OF THE PREFERRED EMBODIMENT

Reference will now be made in detail to specific embodiments of the invention. Examples of these embodiments are illustrated in accompanying drawings. While the invention will be described in conjunction with these specific embodiments, it will be understood that it is not intended to limit the invention to these embodiments. On the contrary, it is intended to cover alternatives, modifications, and equivalents as may be included within the spirit and scope of the invention as defined by the appended claims. In the following description, numerous specific details are set forth in order to provide a through understanding of the present invention. The present invention may be practiced without some or all of these specific details. In other instances, well-known components and process operations are not been described in detail in order not to unnecessarily obscure the present invention. While drawings are illustrated in details, it is appreciated that the quantity of the disclosed components may be greater or less than that disclosed, except expressly restricting the amount of the components.

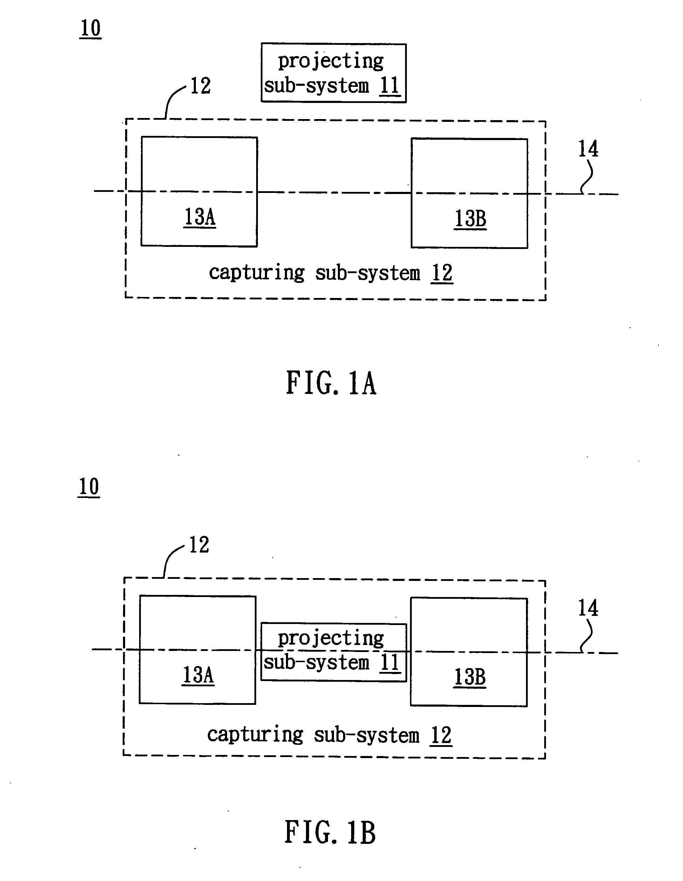

Figure 1A and figure 1B are block diagrams showing an image-projecting and image-capturing system 10 according to an embodiment of the present invention. The image-projecting and image-capturing system 10 primarily comprises a projecting sub-system 11 for projecting images and a capturing sub-system 12 for capturing digital images such as digital pictures or digital movies. The capturing sub-system 12 primarily comprises a zoom lens 13A/B, which comprises a plurality of lens groups moved along an optical axis 14. Note that element 13A and 13B respectively denotes one or more lens groups. As shown in figure 1A, when capturing an image, the projecting sub-system 11 is arranged at a location out of the optical axis 14; as shown in figure 1B, when projecting an image, the projecting sub-system 11 is moved to aim the optical axis 14. Hence, when projecting an image, one or more of the lens groups of the zoom lens 13 are incorporated and employed to function for projecting images. In addition, the capturing sub-system 12 and the projecting sub-system 11 have same light paths for saving more space and cost.

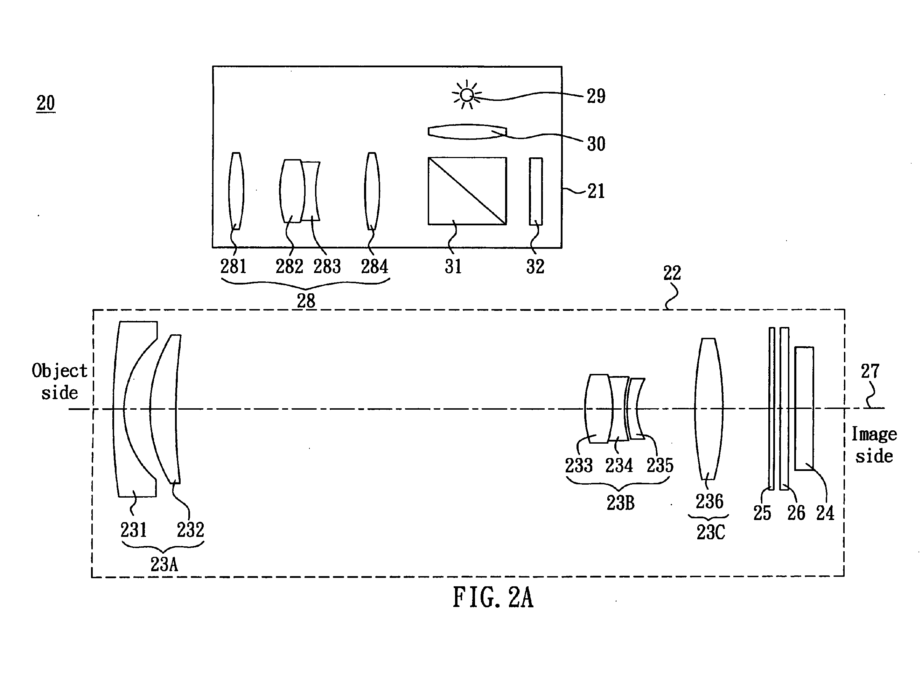

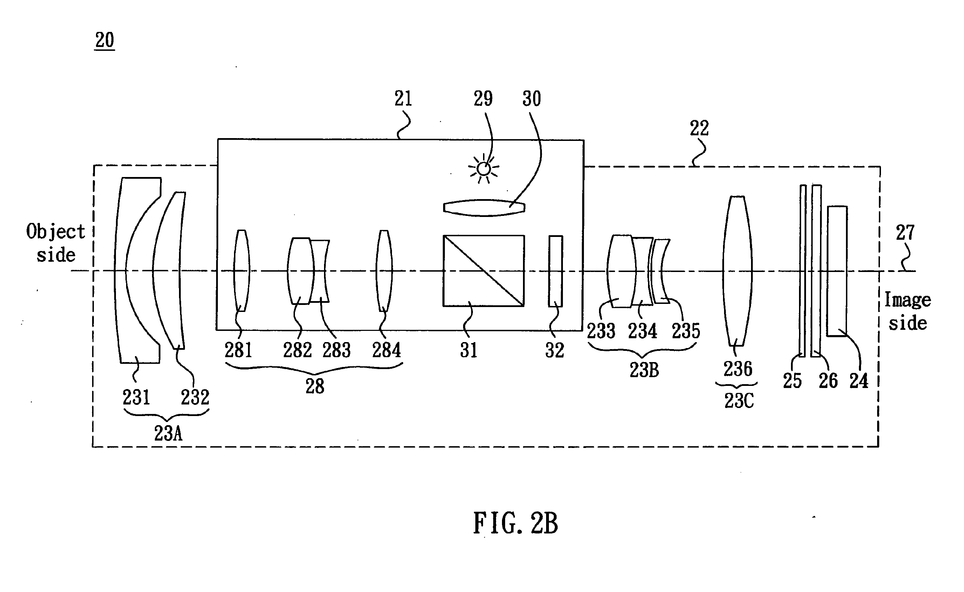

Figure 2A and figure 2B are diagrams showing an image-projecting and image-capturing system 20 according to another embodiment of the present invention. The image-projecting and image-capturing system 20 primarily comprises a projecting sub-system 21 and a capturing sub-system 22. The projecting sub-system 21 primarily comprises a projecting lens module 28, a light source 29, a lens 30, a total internal reflection (TIR) lens 31, and a display chip 32. The capturing sub-system 22 primarily comprises a zoom lens 23 and an image sensor 24, where the zoom lens 23 primarily comprises, from the object side to the image side, a first lens group 23A, a second lens group 23B, and a third lens group 23C. Each lens of the three lens groups may be moved along with an optical axis 27 and two planar lens 25 and lens 26 may be arranged between the third lens group 23C and the image sensor 24.

More specifically, in one embodiment, the first lens group 23A of the zoom lens 23 includes, from the object side to the image side, a first lens 231 and a second lens 232, and both of them are convex-concave lenses having a convex surface toward to the object side; the second lens group 23B includes a third lens 233, a fourth lens 234, and a fifth lens 235, where the third lens 233 is biconvex lens, the fourth lens 234 is biconcave lens, and the fifth lens 235 is convex-concave lens with a convex surface toward to the object side; the third lens group 23C includes a sixth lens 236, which is a biconvex lens. The projecting lens module 28, from the object side to the image side, includes a first lens 281, a second lens 282, a third lens 283, and a fourth lens 284, where the first lens 281 is biconvex lens, the second lens 282 is biconvex lens, the third lens 283 is biconcave lens, the fourth lens 284 is biconvex lens, and the second lens 282 and the third lens 283 are adhered to each other.

Notice that some minor components may be omitted for simplicity, and components of the projecting sub-system 21 and the capturing sub-system 22 may be varied for design requirements.

As shown in figure 2A, when capturing an image, the projecting sub-system 21 is arranged at a location out of the optical axis 27. As shown in figure 2B, when projecting an image, the projecting sub-system 21 is moved to aim the optical axis 27. Accordingly, the light source 29 emits a beam through the lens 30 and then conducted by the TIR (total internal reflection) lens 31, reaching the display chip 32, such as liquid crystal on silicon (LCOS), liquid crystal display (LCD), digital micromirror device (DMD), and so on. After that, the display chip 32 converts the beam to an image beam, which passes through the projecting lens module 28 and the first lens group23A of the zoom lens 23 of the capturing sub-system 22, then is projected on a wall or a screen. Notice that in other embodiments of the present invention, when projecting images, the projecting sub-system 21 is not limited to be moved to the location between the first lens group 23A and the second lens group 23B, and it can be moved to other locations, such as the location between the second lens group 23B and the third lens group 23C.

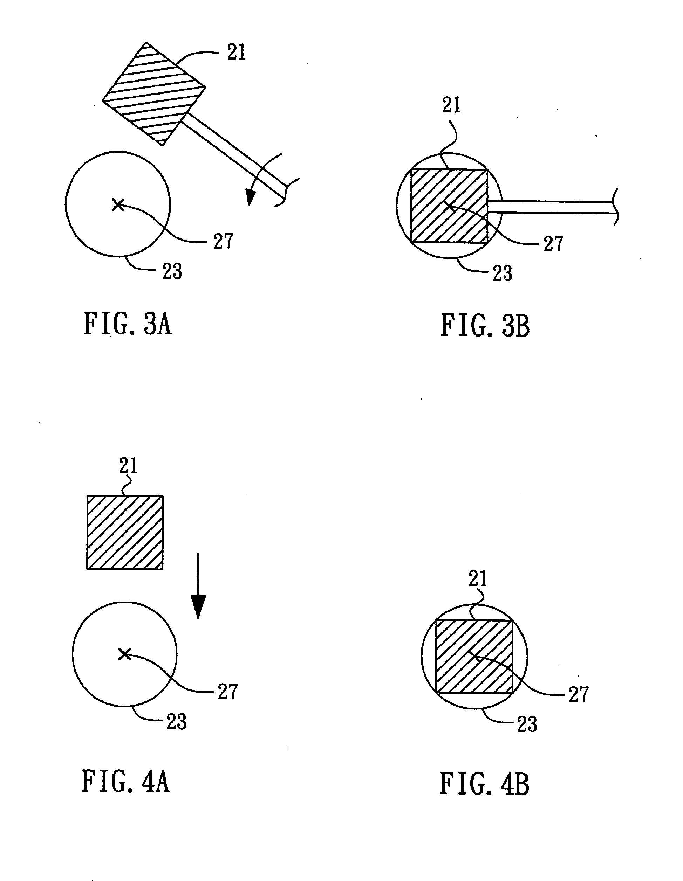

The mechanism or method for moving the projecting sub-system may comprise ways of rotation and shift. Figure 3A and figure 3B show a rotation way according to an embodiment. As shown in figure 3A, when capturing an image, the projecting sub-system 21 is arranged at a location out of the optical axis 27. As shown in figure 3B, when projecting an image, the projecting sub-system 21 is rotated to aim the optical axis 27.

Figure 4A and figure 4B show a shift way to move the projecting sub-system according to an embodiment. As shown in figure 4A, when capturing an image, the projecting sub-system 21 is arranged at a location out of the optical axis 27. As shown in figure 4B, when projecting an image, the projecting sub-system 21 is shifted to aim the optical axis 27. Note that the mechanism or method shown in figure 3A to figure 4B may also be applied to the image-projecting and image-capturing system shown in figure 1A and figure 1B.

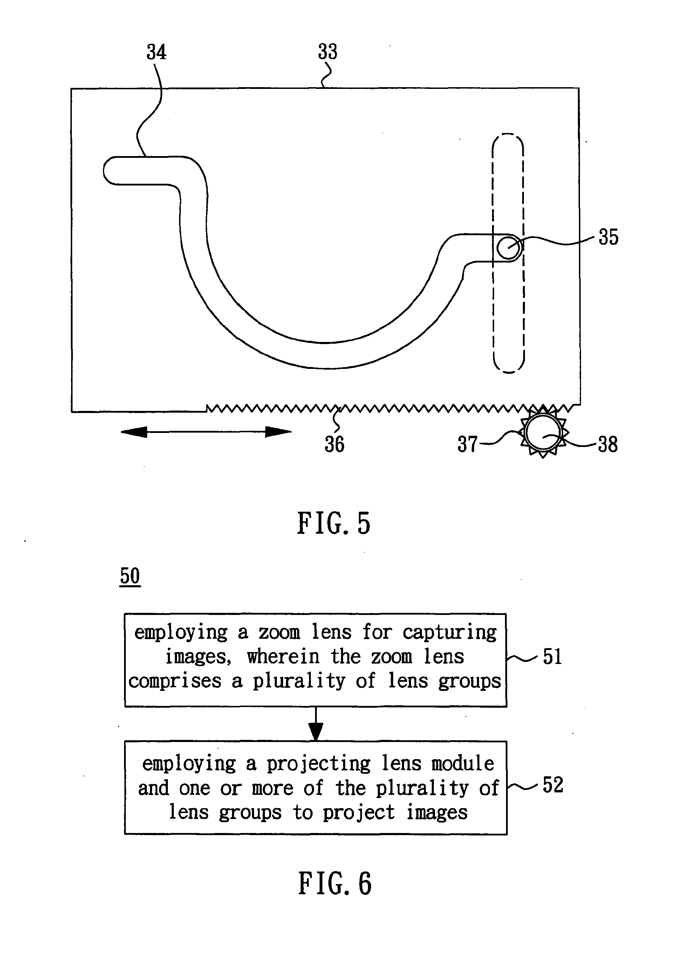

Figure 5 shows a detail structure of the shift way to move the projecting sub-system, according to an embodiment of the present invention. As shown in figure 5, the image-projecting and image-capturing system may comprise a switch plate 33, which is moved along a direction perpendicular to the optical axis 14/27 (not shown in figure 5, the optical axis is parallel to the normal vector of the switch plate 33). In addition, the switch plate 33 comprises a slot cam 34 and a protrusion 35 installed and moved within the slot cam 34. The protrusion 35 is connected with the projecting sub-system 11/21; hence the moves of the switch plate 33 will result in the projecting sub-system 11/21 to be moved to the required positions.

The mechanism for moving the switch plate 33 should not be limited. For example, as shown in figure 5, one side of the switch plate 33 may comprise a plurality of cogs 36 engaged with a gear 37 of a motor 38, such that the switch plate 33 can be driven by the motor 38.

Figure 6 is a flow chart showing a method of image-projecting and image-capturing 50 according to another embodiment of the present invention. The method primarily includes: step 51, employing a zoom lens for capturing images, wherein the zoom lens comprise a plurality of lens groups, such as zoom lens 23 as shown in figure 2A, but not limited; and step 52, employing a projecting lens module and one or more of the plurality of lens groups for projecting images, wherein the projecting lens module may be the projecting lens module 28 shown in figure 2A, but it should not be limited.

According to the method of image-projecting and image-capturing 50, the plurality of lens groups are moved along with an optical axis, when capturing an image, the projecting lens module is arranged at a location out of the optical axis, when projecting an image, the projecting lens module is moved to aim the optical axis. The projecting lens module may be moved by way of rotation or shift. Note that in the embodiment of figure 6, when moving the projecting lens module, other components for projecting images may be moved as well or not moved. In one embodiment, other components for projecting images may comprise a light source, a lens, a total internal reflection lens, and a display chip, and when the projecting lens module is moved, these components are also moved and thus the display chip to be aimed the optical axis. In addition, the display chip may be liquid crystal on silicon (LCOS), liquid crystal display (LCD), or digital micromirror device (DMD).

Accordingly, above embodiments of the present invention provides system and method in which the image-projecting and the image-capturing use the same light paths to save space and cost. In addition, when projecting images, the focal length can be quickly and precisely adjusted as one or more of lens groups of the zoom lens are also employed.

Although specific embodiments have been illustrated and described, it will be appreciated by those skilled in the art that various modifications may be made without departing from the scope of the present invention, which is intended to be limited solely by the appended claims.

## Claims

1. An image-projecting and image-capturing system, primarily comprising:
a projecting sub-system for projecting images; and
a capturing sub-system for capturing images;
wherein the capturing sub-system primarily comprises a zoom lens including a plurality of lens groups moved along an optical axis, when capturing an image, the projecting sub-system is arranged at a location out of the optical axis, when projecting an image, the projecting sub-system is moved to aim the optical axis.

2. The system as recited in claim 1, wherein the projecting sub-system primarily comprises a projecting lens module, a light source, a lens, a total internal reflection (TIR) lens, and a display chip.

3. The system as recited in claim 2, when the projecting sub-system is moved to aim the optical axis, the projecting sub-system employs the projecting lens module and one or more of the plurality of lens groups to project the image.

4. The system as recited in claim 2, wherein the display chip comprises a liquid crystal on silicon (LCOS) chip.

5. The system as recited in claim 2, wherein the display chip comprises a liquid crystal display (LCD) chip.

6. The system as recited in claim 2, wherein the display chip comprises a digital micromirror device (DMD) chip.

7. The system as recited in claim 1, further comprising a switch plate moving along a direction perpendicular to the optical axis, the switch plate comprising a slot cam and a protrusion installed and moved within the slot cam, wherein the protrusion is connected with the projecting sub-system, and thereby the moves of the switch plate will result in the projecting sub-system to be moved to the required positions.

8. The system as recited in claim 7, wherein one side of the switch plate comprises a plurality of cogs engaged with a gear of a motor, such that the motor can drive the switch plate.

9. The system as recited in claim 2, wherein the projecting lens module comprises, from an object side to an image side, a first lens, a second lens, a third lens, and a fourth lens, wherein the first lens is biconvex lens, the second lens is biconvex lens, the third lens is biconcave lens, the fourth lens is biconvex lens, and the second lens and the third lens are adhered to each other.

10. The system as recited in claim 1, wherein the zoom lens primarily comprises, from an object side to an image side, a first lens, a second lens, a third lens, a fourth lens, a fifth lens, and a sixth lens, in which both the first lens and the second lens are convex-concave lenses having a convex surface toward to the object side, the third lens is biconvex lens, the fourth lens is biconcave lens, the fifth lens is convex-concave lens with a convex surface toward to the object side, and the sixth lens is biconvex lens, and wherein the first lens and second lens construct a first lens group, the third lens, fourth lens, and fifth lens construct a second lens group, and the sixth lens constructs a third lens group.

11. The system as recited in claim 10, wherein when projecting the image, the projecting sub-system is moved to aim the optical axis and moved to a location between the first lens group and the second lens group, and the projecting sub-system employs a projecting lens module and the first lens group to project the image.

## Amended claims

### Amended claims in accordance with Rule 137(2) EPC.

**1.** An image-projecting and image-capturing system (20), primarily having:
a projecting sub-system (21) for projecting images; and
a capturing sub-system (22) for capturing images;
**characterized in that** wherein the capturing sub-system (22) primarily comprises a zoom lens including a plurality of lens groups (23A; 23B; 23C) moved along an optical axis (27), and the projecting sub-system (21) primarily comprises a projecting lens module (28); when capturing an image, the projecting sub-system (21) is arranged at a location out of the optical axis (27), when projecting an image, the projecting sub-system (21) is moved to aim the optical axis (27).

**2.** The system as recited in claim 1, wherein the projecting sub-system further comprises a light source, a lens, a total internal reflection (TIR) lens, and a display chip.

**3.** The system as recited in claim 2, when the projecting sub-system is moved to aim the optical axis, the projecting sub-system employs the projecting lens module and one or more of the plurality of lens groups to project the image.

**4.** The system as recited in claim 2, wherein the display chip comprises a liquid crystal on silicon (LCOS) chip.

**5.** The system as recited in claim 2, wherein the display chip comprises a liquid crystal display (LCD) chip.

**6.** The system as recited in claim 2, wherein the display chip comprises a digital micromirror device (DMD) chip.

**7.** The system as recited in claim 1, further comprising a switch plate moving along a direction perpendicular to the optical axis, the switch plate comprising a slot cam and a protrusion installed and moved within the slot cam, wherein the protrusion is connected with the projecting sub-system, and thereby the moves of the switch plate will result in the projecting sub-system to be moved to the required positions.

**8.** The system as recited in claim 7, wherein one side of the switch plate comprises a plurality of cogs engaged with a gear of a motor, such that the motor can drive the switch plate.

**9.** The system as recited in claim 2, wherein the projecting lens module comprises, from an object side to an image side, a first lens, a second lens, a third lens, and a fourth lens, wherein the first lens is biconvex lens, the second lens is biconvex lens, the third lens is biconcave lens, the fourth lens is biconvex lens, and the second lens and the third lens are adhered to each other.

**10.** The system as recited in claim 1, wherein the zoom lens primarily comprises, from an object side to an image side, a first lens, a second lens, a third lens, a fourth lens, a fifth lens, and a sixth lens, in which both the first lens and the second lens are convex-concave lenses having a convex surface toward to the object side, the third lens is biconvex lens, the fourth lens is biconcave lens, the fifth lens is convex-concave lens with a convex surface toward to the object side, and the sixth lens is biconvex lens, and wherein the first lens and second lens construct a first lens group, the third lens, fourth lens, and fifth lens construct a second lens group, and the sixth lens constructs a third lens group.

**11.** The system as recited in claim 10, wherein when projecting the images, the projecting sub-system is moved to aim the optical axis and moved to a location between the first lens group and the second lens group, and the projecting sub-system employs a projecting lens module and the first lens group to project the image.
